# EUROPÄISCHE PATENTANMELDUNG

(11) **EP 3 578 510 A1**
(43) Veröffentlichungstag der Anmeldung: **11.12.2019**
(21) Anmeldenummer: 18176769.0
(22) Anmeldetag: 08.06.2018
(51) Int. Cl.: C01B 7/01, C01B 11/02

(54) **VERFAHREN ZUR BEREITSTELLUNG VON VERDÜNNUNGSGAS BEI DER HERSTELLUNG VON EDUKT- UND NEBENPRODUKTFREIEM CHLOR UND CHLORDIOXID**

(71) Anmelder: Schmid, Erich, 67435 Neustadt (DE)
(72) Erfinder: Schmid, Erich, 67435 Neustadt (DE)
(74) Vertreter: Zellentin & Partner mbB Patentanwälte

(57) **Zusammenfassung**

Verfahren zur Bereitstellung von Verdünnungsgas bei der Herstellung von Chlor und/oder Chlordioxid durch Umsetzung einer wässrigen Lösung von Hypochlorit, Chlorat, Perchlorat und/oder Chlorit mit Säure, wobei der Lösung des Hypochlorit, Chlorat, Perchlorat und/oder Chlorit ein Carbonat und/oder ein Hydrogencarbonat zugesetzt wird, wobei die Menge an Carbonat und/oder ein Hydrogencarbonat so bemessen wird, dass pro mol Chlor und Chlordioxid mindestens 0,25 mol Kohlendioxid als Verdünnungsgas gebildet werden, und die Säure so dosiert wird, dass eine ausreichende Menge für die Umsetzung von Hypochlorit, Chlorat, Perchlorat oder Chlorit und dem Carbonat und/oder Hydrogencarbonat bereitgestellt wird, wässrige Lösung enthaltend Hypochlorit, Chlorat, Perchlorat und/oder Chlorit zur Herstellung von Chlor und/oder Chlordioxid durch Umsetzung der Lösung mit Säure, wobei die Lösung Hydrogencarbonat und/oder Carbonat in einer Menge von 0,25 bis 5 mol (H)CO₃-Anion pro mol Hypochlorit, Chlorat, Perchlorat bzw. Chlorit enthält und Verwendung der Lösung zur Herstellung von Chlor und/oder Chlordioxid.

## Beschreibung

Die vorliegende Erfindung betrifft ein Verfahren zur Herstellung von reinem, d.h. Edukt- und Nebenprodukt-freiem Chlor und/oder Chlordioxid, bei welchem gleichzeitig mit dem Chlor bzw. Chlordioxid auch Kohlendioxid als integriertes Verdünnungsgas erzeugt wird, sowie Lösungen von Hypochlorit, Chlorit, Perchlorit bzw. Chlorat und Carbonat und/oder Hydrogencarbonat und deren Verwendung zur Herstellung von Chlor und/oder Chlordioxid unter gleichzeitiger Herstellung von Kohlendioxid als Verdünnungsgas.

Chlordioxid ist eine chemische Verbindung von Chlor und Sauerstoff mit der Summenformel ClO₂. Bei Raumtemperatur ist Chlordioxid ein bernsteinfarbenes, explosives und giftiges Gas mit stechendem, chlorähnlichem Geruch.

Die Anwendungen von Chlordioxid beruhen auf seiner Wirkung als Oxidationsmittel. Es ist das wichtigste Bleichmittel der Elementar-Chlor-Freien Bleiche von Zellstoff, insbesondere bei Papier, in der es elementares Chlor fast vollständig ersetzt hat. Zunehmend wird Chlordioxid auch zur Desinfektion vor der Abfüllung von PET-Flaschen verwendet. Weiterhin wird es in der Trinkwasseraufbereitung zur Desinfektion an Stelle von Chlor eingesetzt. Es ist gegen Bakterien genauso oder besser wirksam als Chlor und im Gegensatz zu Chlor auch gegen Viren und viele Protozoen (Einzeller) wirksam.

Zur Chlordioxiderzeugung können viele Verfahren verwendet werden. Am häufigsten ist die Verwendung von Salzsäure und Natriumchlorit als Ausgangskomponenten, da die Herstellung von Chlordioxid aus diesen beiden Komponenten von der Trinkwasserverordnung zugelassen ist. Die Umsetzung erfolgt nach der Gleichung:

5 NaClO₂ + 4 HCl → 4 ClO₂ + 5 NaCl + 2 H₂O

Es können aber auch andere Substanzen mit Natriumchlorit oder mit einem anderen Chlorit umgesetzt werden. Anstelle von Salzsäure eignen sich andere Säuren, wie Schwefelsäure bzw. Säurebildner wie Peroxodisulfate, z. B. Natrium-, Kalium- oder Ammoniumperoxodisulfat, hypochlorige Säure und andere. Statt Natriumchlorit können Chlorite mit anderen Kationen, z.B. Alkalichlorite und Erdalkalichlorite verwendet werden.

Chlordioxidgas kann auch aus Chloraten und Perchloraten hergestellt werden. Diese Umsetzung erfolgt z.B. bei Reaktion von Natriumperchlorat (erhältlich aus einer Elektrolyse von Natriumchlorid) mit Salzsäure nach der Gleichung:

2 NaClO₃ + 4 HCl → 2 ClO₂ + Cl₂ + 2 NaCl + 2 H₂O

Die Schwierigkeiten bei der Herstellung von reinem Chlordioxid liegen darin, eine möglichst vollständige Umsetzung in adäquater Zeit zu erhalten und dabei explosive Konzentrationen von Chlordioxidgas zu vermeiden. Im Stand der Technik können daher die Ausgangsmaterialien nur in solchen Konzentrationen verwendet werden, in denen das Chlordioxid in einer noch nicht explosionsgefährlichen Konzentration erzeugt wird. Das sind meist Gehalte bis maximal 20 000 ppm. Lösungen in Wasser sind nicht explosiv, sofern sie kein Chlordioxid-Luft-Gemisch mit mehr als 10 Vol.-% Chlordioxid erzeugen können.

Es gab schon viele Vorschläge für Vorrichtungen und Verfahren zur Herstellung von Chlordioxid. Dabei werden jedoch auch bei solchen Vorschlägen, die zunächst mit konzentrierten Rohstoffen zu arbeiten scheinen, die Rohstoffe vor oder bei der Reaktion mit Wasser verdünnt und/oder das erzeugte Chlordioxid mit zugeführtem Verdünnungsgas mit oder ohne Kombination mit einem Vakuum auf ungefährliche Konzentrationen verdünnt.

Ein weiterer Aspekt ist, dass Chlordioxid für manche Anwendungen, wie z.B. in Trinkwasser, in reiner Form, d.h. ohne die Edukte und Nebenprodukte der Umsetzung, benötigt wird. Dies erfordert bei vielen bisherigen Vorschlägen separate Aufbereitungsvorrichtungen.

Beispiele für bisherige Vorschläge finden sich u.a. in DE 967 375 A, DE 31 28 817 A1, DE 32 18 475 A1, DE 32 39 029 A1, WO 2009/084854 A2 und EP 2 662 328 A1, DE 10 2010 001 699 A1 und US 6,051,135 A.

Außerdem ist es bekannt, Chlordioxid aus festen, trockenen Zusammensetzungen zu erzeugen. Beispiele für geeignete feste Zusammensetzungen finden sich in WO 2012/019587 A1, EP 933 991 B1, US 4,547,381 A und US 2,482,891 A. Auch bei diesen Verfahren werden verdünnte Edukte eingesetzt, nämlich auf Träger aufgebrachte oder anderweitig feste Edukte, wobei teilweise ein Verdünnungsmittel enthalten sein soll.

Schließlich ist es bekannt, dass wässriges Chlordioxid in Lösung durch Puffer stabilisiert werden kann, siehe z.B. US 3,585,147. Auch wässrige Natriumchloritlösungen enthalten in der Regel herstellungsbedingt geringe Mengen Natriumcarbonat.

Die Zufuhr von Verdünnungsgas bei der Herstellung von Chlordioxid in wässriger Phase erfordert zusätzliche Vorrichtungen am Reaktor für die Umsetzung. Es ist in der Regel nicht möglich, das Verdünnungsgas gezielt an der Stelle zuzusetzen, an welcher am meisten Chlordioxid gebildet wird, da sich diese Stelle durch geringe Änderungen in den Bedingungen leicht innerhalb des Reaktor verschiebt. Es besteht daher weiterhin das Problem, eine möglichst vollständige Umsetzung der Edukte in adäquater Zeit zu erreichen und dabei explosive Konzentrationen von Chlordioxidgas sicher zu vermeiden.

Ein weiteres sehr wichtiges Desinfektionsmittel ist Chlor, welches vor allem in Schwimmbädern zur Wasserdesinfektion eingesetzt wird. Auch in Trinkwasseranlagen ist Chlor üblich, besonders in offenen Anlagen, bei denen Chlordioxid zu stark ausgasen könnte. Chlor kann entweder in Gasflaschen in reiner Form angeliefert und aus diesen dosiert werden oder analog zu Chlordioxid vor Ort erzeugt werden. Die Gasflasche liefert zwar reines Chlor, birgt aber hohe Risiken, die Handhabung erfordert enorme Sicherheitsvorkehrungen. Eine Herstellung vor Ort erfolgt bisher entweder durch Chlor-Alkali-Elektrolyse oder durch Zugabe von Hypochlorit, meist als wässrige Lösung von Natriumhypochlorit oder als festes Calciumhypochlorit.

Bei der Chlor-Alkali-Elektrolyse reagiert Chlorid unter Stromzufuhr mit Wasser zu Chlor, Wasserstoff und Hydroxid. Die Umsetzung erfolgt nach der Gleichung:

2 Cl⁻ + 2 H₂O → Cl₂ + 2 OH⁻ + H₂

Als Nebenprodukte bilden sich abgesehen von Hydroxid und Wasserstoff z.B. Chlorite, Chlorate und Perchlorate, da die Elektrolyse nicht selektiv möglich ist. Die Elektrolyse erfolgt direkt im zu behandelnden Wasser, so wird im Ergebnis mit einer sehr "schmutzigen" Lösung desinfiziert, es gelangen viele Nebenprodukte ins Wasser. Die entstehende Lauge kann zur pH-Wert Justierung des Schwimmbadwassers verwendet werden oder muss stark verdünnt - z.B. mit enthärtetem Wasser - ins Abwasser entsorgt werden.

Die Erzeugung von Chlor aus Hypochlorit und Säure erfolgt gemäß den Gleichungen (am Beispiel von Natriumhypochlorit und Salzsäure):

NaOCI + 2 HCl → HOCI + 2 H₂O

HOCI + HCl → Cl₂ + HCl

Bei der Verwendung von Natriumhypochloritlösung oder Calciumhypochlorit sind bedingt durch deren Herstellung immer Chloride und Chlorate enthalten. Zudem disproportioniert Hypochlorit in wässriger Lösung zu Chlorid und Chlorat, siehe z.B. "Hygieneanforderungen an Bäder und deren Überwachung", Bundesgesundheitsblatt 2014, DOI 10.1007/s00103-013-1899-7. Deren Gehalt steigt somit immer weiter an. Da die Lösung direkt dem Wasser zugeführt wird, sind diese Nebenprodukte unerwünscht, Chlorid weil es Korrosion verursacht und Chlorat weil es gesundheitlich bedenklich ist. Außerdem erhöht der Zusatz von Natronbleichlauge bzw. Chlorkalk den pH Wert des Wassers. Dieser muss daher umständlich mittels Säure, z.B. Schwefelsäure oder saurem Bisulfat, wieder auf den niedrigen pH Wert eingestellt werden, den die Hypochlorige Säure für gute und effektive Wirkung (Freisetzung von Chlor) braucht. Daher wäre es wünschenswert, reines Chlor sicher und ohne die mit Gasflaschen verbundenen Risiken bereitstellen zu können.

Überraschend wurde nun gefunden, dass bei einer Herstellung von Chlor und/oder Chlordioxid in wässriger Phase ein Zusatz einer ausreichenden Menge von Carbonat und/oder Hydrogencarbonat zu der Hypochlorit-, Chloratlösung, Perchlorat- bzw. Chloritlösung auf sehr einfache Weise Kohlendioxid als Verdünnungsgas direkt örtlich und mengenmäßig mit der Chlor bzw. Chlordioxiderzeugung bereitstellt.

Die obige Aufgabe wird daher durch ein Verfahren zur Bereitstellung von Verdünnungsgas bei der Herstellung von Chlor und/oder Chlordioxid gelöst, bei dem einer wässrigen Lösung zur Umsetzung von Hypochlorit, Chlorat, Perchlorat oder Chlorit mit Säure einer Lösung des Hypochlorit, Chlorat, Perchlorat oder Chlorit, die in einen Reaktor zur Umsetzung geführt wird, ein Carbonat und/oder ein Hydrogencarbonat zugesetzt wird, wobei die Menge an Carbonat und/oder ein Hydrogencarbonat so bemessen wird, dass pro mol Chlor und Chlordioxid mindestens 0,25 mol Kohlendioxid als Verdünnungsgas gebildet werden, und die Säure so dosiert wird, dass eine ausreichende Menge für die Umsetzung von Hypochlorit, Chlorat, Perchlorat oder Chlorit und dem Carbonat und/oder Hydrogencarbonat bereitgestellt wird. Die Aufgabe wird außerdem gelöst durch eine wässrige Lösung von Hypochlorit, Chlorat, Perchlorat oder Chlorit, die 0,25 bis 5 mol (H)CO₃-Anion pro mol Hypochlorit, Chlorat, Perchlorat bzw. Chlorit enthält, sowie durch deren Verwendung bei der Herstellung von Chlor bzw. Chlordioxid durch Umsetzung der Lösung mit Säure.

Erfindungsgemäß wird Chlordioxid bevorzugt aus Chlorit und Säure, gemeinsam als Edukte bezeichnet, hergestellt. Eine Umsetzung von Chlorat und Säure führt zu mit Chlor vermischtem Chlordioxidgas. Solches Chlordioxid kann vorteilhaft sein, z.B. wird es in einigen Fällen zur Trinkwasserdesinfektion benutzt.

Die Herstellung von Chlor erfolgt aus Hypochlorit und Säure, ebenfalls gemeinsam als Edukte bezeichnet. Für die gezielte Herstellung von Gemischen aus Chlor und Chlordioxid können neben Chlorat und/oder Perchlorat und Säure auch Gemische von Hypochlorit und Chlorit, einzeln oder im Gemisch, mit Säure umgesetzt werden. Hypochlorit, Chlorit und Säure werden ebenso wie Chlorit und Säure, Chlorat und Säure, Perchlorat und Säure und Hypochlorit und Säure gemeinsam als Edukte bezeichnet.

Als Säure wird Salzsäure bevorzugt, jedoch kann auch jede andere chlor- bzw. chlordioxidstabile Säure verwendet werden, beispielsweise organische Säuren wie Essigsäure und Zitronensäure, oder andere Mineralsäuren, wie beispielsweise Schwefelsäure und hypochlorige Säure. Auch Mischungen von Säuren sind geeignet. Weiterhin sind auch solche Substanzen als Säure geeignet, die die Säure erst in wässriger Lösung freisetzen, wie beispielsweise Peroxodisulfate, insbesondere Natrium- oder Kaliumperoxodisulfat. Unter dem Begriff Säure sind daher im Rahmen der vorliegenden Erfindung auch säurebildende Substanzen wie Peroxodisulfate zu verstehen. Bevorzugte Salzsäurelösungen enthalten von 20 bis 37 Gew.-%, insbesondere 30 bis 33 Gew.-% HCl.

Als Chlorit werden Alkali- und Erdalkalichlorite bevorzugt, ganz besonders wird Natriumchlorit bevorzugt. Es sind jedoch alle Chlorite einsetzbar, beispielsweise Kaliumchlorit, Calciumchlorit usw., ebenso Gemische von Chloriten. Handelsübliche Lösungen enthalten z.B. 20 - 30 Gew.-% Natriumchlorit.

Sofern Chlorat als Edukt eingesetzt wird, werden ebenfalls Alkali- und Erdalkalichlorate bevorzugt, ganz besonders wird Natriumchlorat bevorzugt. Wie an sich bekannt, kann Natriumchlorat durch Elektrolyse von Natriumchlorid erzeugt werden, wobei sich die bei der Umsetzung von Chlorat und Säure bildende verbrauchte Reaktionslösung hierfür als Einsatzmaterial gut eignet.

Als Hypochlorit werden Natriumhypochlorit und Kaliumhypochlorit bevorzugt, wobei ebenfalls andere Hypochlorite und Gemische verwendet werden können. Auch als Perchlorat werden Natriumperchlorat und Kaliumperchlorat bevorzugt, wobei ebenfalls andere Perchlorate und Gemische verwendet werden können.

Schließlich können zur gezielten Herstellung von Gemischen aus Chlor und Chlordioxid Gemische von Natriumchlorit mit Natriumhypochlorit und/oder Kaliumhypochlorit oder nur Natriumhypochlorit oder Kaliumhypochlorit verwendet werden. Die Bezeichnung Hypochlorit, Chlorat, Perchlorat und/oder Chlorit bedeutet ebenso wie die Bezeichnung Hypochlorit, Chlorat, Perchlorat bzw. Chlorit, dass es sich um Hypochlorit oder um Chlorat oder um Perchlorat oder um Chlorit oder um ein Gemisch von Chlorit mit Hypochlorit handelt.

Erfindungsgemäß wird der Hypochlorit-, Chlorat, Perchlorat- bzw. Chloritlösung ein Carbonat und/oder Hydrogencarbonat zugefügt, aus dem parallel zur Erzeugung des Chlor bzw. Chlordioxid als Verdünnungsgas Kohlenstoffdioxid erzeugt wird. Zur Vereinfachung wird im folgenden von (Hydrogen)carbonat gesprochen, was sowohl Hydrogencarbonat als auch Carbonat als auch Mischungen davon bezeichnet. Handelsübliche Natriumchloritlösung enthält zwar üblicherweise bereits eine geringe Menge Natriumcarbonat, das daraus gebildete Kohlenstoffdioxidgas verursacht aber keine merklichen Effekte, da die Menge viel zu gering ist.

Erfindungsgemäß wird die Menge (Hydrogen)carbonat vorzugsweise so gewählt, dass von 0,25 bis 5 mol (H)CO₃-Anion pro mol Hypochlorit, Chlorat, Perchlorat bzw. Chlorit enthalten sind, insbesondere von 0,5 bis 3 mol. Die Angaben verstehen sich in Bezug auf Hypochlorit, Chlorat, Perchlorat bzw. Chlorit so, dass deren gesamte Menge gemeint ist. Werden beispielsweise Hypochlorit und Chlorit verwendet, so werden pro mol der Summe an Hypochlorit und Chlorit je 0,25 bis 5 mol (Hydrogen)carbonat verwendet. Wird nur eines von Hypochlorit, Chlorat, Perchlorat und Chlorit eingesetzt, bezieht sich die Molmengenangabe auf dieses allein. Durch den Zusatz an (Hydrogen)carbonat bildet sich eine entsprechende molare Menge Kohlendioxid pro mol Chlor bzw. Chlordioxid. Die Untergrenze richtet sich nach der jeweils benötigten Menge Verdünnungsgas, welche u.a. von der Konzentration der Edukte und der Bauweise des Reaktors abhängt. Bei gekühlten Reaktoren oder einer kontinuierlichen Abfuhr des Chlordioxid z.B. mittels Vakuum ist die benötigte Menge geringer als bei einer diskontinuierlichen Herstellung. Ebenso ist bei Chlor die benötigte Menge z.B. geringer, wenn dieses durch Vakuum und/oder einen Inertgasstrom aus der Lösung ausgetrieben wird. Die Obergrenze resultiert daraus, dass einerseits mehr (Hydrogen)Carbonat mehr Säure verbraucht, die folglich nicht für die Umsetzung des Hypochlorit, Chlorat, Perchlorat bzw. Chlorit verfügbar ist, und andererseits zusätzliches Einsatzmaterial Kosten verursacht und unnötig Abfall produziert.

Als (Hydrogen)Carbonat sind prinzipiell alle CO₃²⁻-enthaltenden Verbindungen brauchbar, welche durch Reaktion mit Säure Kohlendioxid freisetzen. In einer Ausführungsform wird Kaliumhydrogencarbonat als (Hydrogen)Carbonat verwendet, da es gut löslich ist. In einer weiteren Ausführungsform wird Kaliumcarbonat verwendet, da eine erhöhte Salzkonzentration das Ausgasen von Chlordioxid aus der flüssigen Phase fördert. Natriumhydrogencarbonat sowie Natrium- und Kaliumcarbonat oder Gemische der genannten (Hydrogen)carbonate sind ebenfalls brauchbar. Außerdem sollte sich Ammonium(hydrogen)carbonat eignen. Die Verwendung anderer (Hydrogen)carbonate ist wegen der geringen Löslichkeit und/oder eines höheren Preises dieser Substanzen nicht wirtschaftlich.

Der große Vorteil des Einsatzes von (Hydrogen)carbonat in der Hypochlorit-, Chlorat-, Perchlorat- bzw. Chloritlösung besteht darin, dass das Verdünnungsgas Kohlendioxid zusammen mit dem Chlor bzw. Chlordioxid gebildet wird, d.h. genau an der Stelle, wo es gebraucht wird. Somit steht an Orten hoher Chlor bzw. Chlordioxidkonzentration auch eine große Menge Verdünnungsgas zur Verfügung.

Weitere Vorteile des Zusatzes von (Hydrogen)carbonat sind eine geringere Löslichkeit des Chlor und/der Chlordioxid in der wässrigen Phase, da diese mehr Salz enthält, sowie eine Verbesserung der Ausgasung da die gebildeten Kohlenstoffdioxidbläschen Chlor bzw. Chlordioxid mitreißen.

Es ist natürlich möglich, weiteres Verdünnungsgas wie z.B. Luft, Stickstoff, und andere chlor- bzw. chlordioxidstabile Gase zuzuführen. Ein besonders bevorzugtes Verdünnungsgas bei einer Herstellung in einem Reaktor, der sowohl eine flüssige als auch eine Gasphase umfasst, ist ein Aerosol aus Wasser in einem der erwähnten Gase, insbesondere Luft. Chlor bzw. Chlordioxid löst sich in den feinsten Wassertröpfchen. Damit wird die Konzentration Chlordioxid in der Gasphase und die Explosionsgefahr vermindert bzw. Chlor effektiver abgeführt, es sind höhere Konzentrationen, Durchsätze bzw. Leistungen möglich. In der Regel wird ein zusätzliches Verdünnungsgas dem Reaktor nahe bei oder durch den Auslass für die flüssige Phase zugeführt. Alternativ erfolgt die Zufuhr an oder in Gasströmungsrichtung kurz vor der Stelle der höchsten Chlor- bzw. Chlordioxidkonzentration. Es kann vorteilhaft sein, das Verdünnungsgas oder verschiedene Verdünnungsgase an mehreren Stellen zuzuführen.

Die Mischung von Hypochlorit, Chlorat, Perchlorat bzw. Chlorit und (Hydrogen)carbonat sowie die Säure werden in der Regel aus Vorratsbehältern dosiert. Dazu kann jede an sich bekannte Dosiervorrichtung eingesetzt werden, beispielsweise eine Proportionalpumpe oder Ventile kombiniert mit der Schwerkraft. Säure und Hypochlorit, Chlorat, Perchlorat bzw. Chlorit werden dem Reaktor mit Hilfe getrennter Leitungen zugeführt. Sowohl Hypochlorit, Chlorat, Perchlorat bzw. Chlorit als auch Säure werden als wässrige Lösung eingesetzt.

Erfindungsgemäß enthält vorzugsweise die Hypochlorit-, Chlorat-, Perchlorat- bzw. Chloritlösung das (Hydrogen)Carbonat. Es ist auch möglich, aber nicht bevorzugt, das (Hydrogen)Carbonat aus einem separaten Vorratsbehälter in die Zufuhrleitung des Hypochlorit, Chlorat, Perchlorat bzw. Chlorit einzuspeisen. Auch eine direkte Zufuhr in den Reaktor an einer Stelle vor der Zufuhr der Edukte oder jedenfalls vor der Zufuhr des zuletzt eingespeisten Edukts ist möglich. Diese Ausführungsform verzichtet auf einen der Vorteile der Erfindung, nämlich die Möglichkeit ohne separate Vorrichtungsteile für die Zufuhr von Verdünnungsgas auszukommen.

Als Reaktor eignen sich alle an sich bekannten Reaktoren zur Herstellung von Chlor und/oder Chlordioxid in wässriger Phase. Besonders bevorzugt sind Reaktoren, bei denen das durch die Umsetzung in der flüssigen Phase gebildete Chlor bzw. Chlordioxid direkt in eine Gasphase überführt und damit abgeführt wird. Besonders geeignet sind beispielsweise die in DE 10 2010 034 392 A1 und EP 2 662 328 A1 beschriebenen Reaktoren. Ganz besonders bevorzugt ist die Vorrichtung in der am gleichen Tag eingereichten Anmeldung EP 18176762.5, deren Inhalt hiermit durch Bezugnahme aufgenommen ist.

Bei der ganz besonders bevorzugten Vorrichtung wird der Reaktor von einem Wellschlauch oder einem anderen, getrennte Kompartimente bereitstellenden Schlauch gebildet. In diesem Reaktor strömen Hypochlorit-, Chlorat-, Perchlorat- bzw. Chloritlösung im Gegenstrom mit dem die Gasphase bildenden Chlor bzw. Chlordioxid und Kohlendioxid durch den waagerecht oder unter einem Neigungswinkel angeordneten Schlauch. In den Kompartimenten sammelt sich flüssige Phase in welcher die Umsetzung erfolgt. Die Gasphase, welche von ausgasendem Chlor bzw. Chlordioxid und Kohlendioxid sowie ggfs. zugeführtem zusätzlichem Verdünnungsgas gebildet wird, strömt darüber hinweg. Die Abfuhr der Gasphase aus dem Reaktor kann durch eine Vakuumpumpe und/oder Zufuhr von zusätzlichem Verdünnungsgas mit Überdruck unterstützt werden.

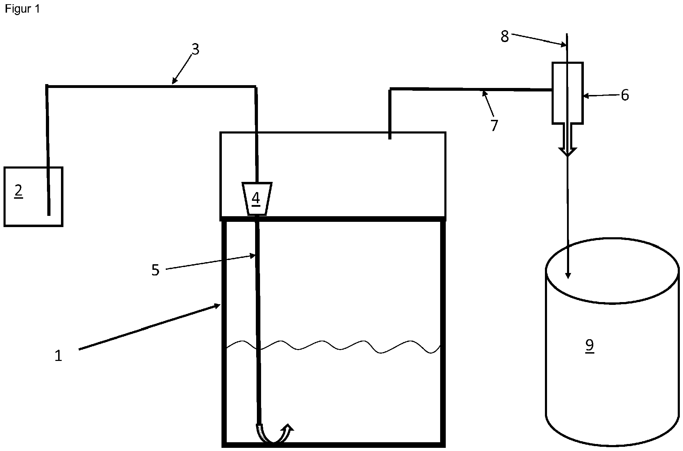

Eine weitere ganz besonders bevorzugte Vorrichtung ist in Figur 1 dargestellt. Sie umfasst einen geschlossenen Reaktor 1, in welchem die Säure, z.B. Salzsäure vorgelegt wird. Die Hypochlorit-, Chlorat-, Perchlorat- bzw. Chloritlösung, welche auch (Hydrogen)Carbonat enthält, befindet sich in einem Vorratsbehälter 2. Aus diesem wird sie über eine Leitung 3 und einen Trichter 4 sowie ein Rohr 5 in den Reaktor 1 dosiert. Die Dosierung kann auf verschiedene Weise erfolgen, möglich sind beispielweise Ventile kombiniert mit einer Pumpe oder der Schwerkraft. Bevorzugt erfolgt die Dosierung über eine Kapillare in Kombination mit der Wasserstrahlpumpe 6, welche das gebildete Chlor bzw. Chlordioxid und Kohlendioxid über eine Leitung 7 aus dem Reaktor 1 abzieht. Das Kohlendioxid unterstützt die Ausgasung des Chlor bzw. Chlordioxid aus der Säure. Das Chlor bzw. Chlordioxid löst sich im Antriebswasser 8 der Wasserstrahlpumpe 6 und wird mit diesem in einen Vorratsgefäß 8 aufgefangen. Alternativ kann es auch direkt der vorgesehenen Verwendung zugeführt werden. Außerdem ist es natürlich möglich, anstelle einer Wasserstrahlpumpe eine andere Pumpe einzusetzen, welche dann hinter dem Vorratsbehälter 8 angeordnet und über eine weitere Leitung mit diesem verbunden wird. Die Leitung 7 sollte sich in diesem Fall bis nahe zum Boden des Vorratsgefäßes 8 erstrecken, in welchem Wasser vorgelegt wird bzw. welcher von Wasser durchspült wird. Vorzugsweise wird dabei ein Gasverteiler, z.B. eine Fritte, als Auslass vorgesehen, um das Gas möglichst in dem Wasser zu verteilen. Diese Vorrichtung ist besonders einfach und damit auch robust und kostengünstig. Ohne die integrierte Schutzgasentwicklung würde aber das Chlordioxid und besonders das Chlor nicht gut genug aus der Säure ausgasen, so dass diese Vorrichtung erst durch das erfindungsgemäße Verfahren zur Bereitstellung von Verdünnungsgas brauchbar wird.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Die Erfindung soll anhand des folgenden Beispiels erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

### Beispiel

Zur Simulation der Umsetzung bei der Herstellung von Chlordioxid wurden je 100 ml wässrige Lösung von Natriumchlorit mit zugesetzem (Hydrogen)Carbonat mit 100 ml 9 %-iger Salzsäure vermischt und die innerhalb von 30 Minuten freigesetze Gasmenge ermittelt. Die Edukte wurden zur Vermischung in einen geschlossenen Behälter gepumpt. Dieser war über einen Schlauch mit einem Standzylinder verbunden, welcher mit Wasser gefüllt und mit der Öffnung nach unten in einem mit Wasser gefüllten Gefäß angeordnet war. Die freigesetzte Gasmenge wurde an der Skalierung des Standzylinders abgelesen. Zum Vergleich wurde reine Natriumchloritlösung herangezogen. Die verwendeten Rohstoffe waren technische Qualitäten. Die Ergebnisse fasst Tabelle 1 zusammen.

**Tabelle 1**

| wässrige Lösung enthält | entwickelte Gasmenge |
|---|---|
| Natriumchlorit 7,5 % und Natriumbicarbonat 5% | ca. 875 ml |
| Kaliumbicarbonat 10%ig und Natriumchlorit 7,5% | ca. 2750 ml |
| Kaliumcarbonat 10%ig und Natriumchlorit 7,5 % | ca. 1132 ml |
| Natriumchlorit 7,5% | ca. 20 ml |

Es ist deutlich erkennbar, dass durch den Zusatz von Natrium- und Kaliumhydrogencarbonat sowie von Kaliumcarbonat eine große Menge Schutzgas freigesetzt wurde, die das hergestellte Chlordioxid direkt verdünnt. Dazu sind keine zusätzlichen Apparaturteile notwendig, die verwendeten (Hydrogen)Carbonate sind kostengünstig und jederzeit verfügbar und zudem gesundheitlich unbedenklich.

### Bezugszeichenliste

- 1: Reaktor
- 2: Vorratsbehälter
- 3: Leitung
- 4: Trichter
- 5: Rohr
- 6: Wasserstrahlpumpe
- 7: Leitung
- 8: Antriebswasser
- 9: Vorratsgefäß

## Patentansprüche

1. Verfahren zur Bereitstellung von Verdünnungsgas bei der Herstellung von Chlor und/oder Chlordioxid durch Umsetzung einer wässrigen Lösung von Hypochlorit, Chlorat, Perchlorat und/oder Chlorit mit Säure, **dadurch gekennzeichnet, dass** der Lösung des Hypochlorit, Chlorat, Perchlorat und/oder Chlorit, die in einen Reaktor zur Umsetzung geführt wird, ein Carbonat und/oder ein Hydrogencarbonat zugesetzt wird, wobei die Menge an Carbonat und/oder ein Hydrogencarbonat so bemessen wird, dass pro mol Chlor und Chlordioxid mindestens 0,25 mol Kohlendioxid als Verdünnungsgas gebildet werden, und die Säure so dosiert wird, dass eine ausreichende Menge für die Umsetzung von Hypochlorit, Chlorat, Perchlorat und/oder Chlorit und dem Carbonat und/oder Hydrogencarbonat bereitgestellt wird.

2. Verfahren gemäß Anspruch 1, **dadurch gekennzeichnet, dass** die Menge an Carbonat und/oder ein Hydrogencarbonat so bemessen wird, dass von 0,25 bis 5 mol Kohlendioxid pro mol Chlor und Chlordioxid gebildet werden, insbesondere von 0,5 bis 3 mol Kohlendioxid pro mol Chlor und Chlordioxid.

3. Verfahren gemäß Anspruch 1 oder 2, **dadurch gekennzeichnet, dass** Kaliumhydrogencarbonat, Natriumhydrogencarbonat, Natriumcarbonat, Kaliumcarbonat oder Gemische davon als Carbonat und/oder Hydrogencarbonat verwendet werden.

4. Verfahren gemäß einem der Ansprüche 1 bis 3, **dadurch gekennzeichnet, dass** das Carbonat und/oder Hydrogencarbonat einem Vorratsbehälter der Lösung des Hypochlorit, Chlorat, Perchlorat und/oder Chlorit zugefügt wird.

5. Verfahren gemäß einem der Ansprüche 1 bis 3, **dadurch gekennzeichnet, dass** das Carbonat und/oder Hydrogencarbonat einer Zufuhrleitung für die Lösung des Hypochlorit, Chlorat, Perchlorat und/oder Chlorit oder dem Reaktor vor der Zufuhrstelle der Lösung des Hypochlorit, Chlorat, Perchlorat und/oder Chlorit und/oder der Zufuhrstelle der Säure in den Reaktor zugeführt wird.

6. Verfahren gemäß einem der Ansprüche 1 bis 5, **dadurch gekennzeichnet, dass** zusätzliches Verdünnungsgas, vorzugsweise Luft, Stickstoff, Kohlendioxid oder ein Aerosol aus Wasser in einem der genannten Gase, insbesondere in Luft, verwendet wird.

7. Wässrige Lösung enthaltend Hypochlorit, Chlorat, Perchlorat und/oder Chlorit zur Herstellung von Chlor und/oder Chlordioxid durch Umsetzung der Lösung mit Säure, **dadurch gekennzeichnet, dass** die Lösung Hydrogencarbonat und/oder Carbonat in einer Menge von 0,25 bis 5 mol (H)CO₃-Anion pro mol Hypochlorit, Chlorat, Perchlorat bzw. Chlorit enthält.

8. Wässrige Lösung gemäß Anspruch 7, **dadurch gekennzeichnet, dass** die Lösung 0,5 bis 5 mol (H)CO₃-Anion pro mol Hypochlorit, Chlorat, Perchlorat bzw. Chlorit enthält.

9. Wässrige Lösung gemäß Anspruch 7 oder 8, **dadurch gekennzeichnet, dass** die Lösung Natriumchlorit als Chlorit enthält, vorzugsweise in einer Konzentration von 5 bis 30 Gew.-%.

10. Wässrige Lösung gemäß Anspruch 7 oder 8, **dadurch gekennzeichnet, dass** die Lösung Natrium- und/oder Kaliumchlorat als Chlorat enthält, vorzugsweise in einer Konzentration von 1 bis 10%, oder Natrium- und/oder Kaliumperchlorat als Perchlorat enthält, vorzugsweise in einer Konzentration von 1 bis 3 %, oder Natrium- und/oder Kaliumhypochlorit als Hypochlorit enthält, vorzugsweise in einer Konzentration von 5 bis 18 %.

11. Wässrige Lösung gemäß einem der Ansprüche 7 bis 10, **dadurch gekennzeichnet, dass** die Lösung Kaliumhydrogencarbonat, Kaliumcarbonat, Natriumhydrogencarbonat und/oder Natriumcarbonat als Hydrogencarbonat und/oder Carbonat, vorzugsweise Kaliumhydrogencarbonat oder Kaliumcarbonat.

12. Verwendung einer Lösung gemäß einem der Ansprüche 7 bis 11 zur Herstellung von Chlor und/oder Chlordioxid, wobei die Lösung einem Reaktor zugeführt und im Reaktor mit einer Säure zu Chlor und/oder Chlordioxid und Kohlendioxid umgesetzt wird.

13. Verwendung gemäß Anspruch 12, **dadurch gekennzeichnet, dass** die Säure ausgewählt ist unter Salzsäure, Schwefelsäure, Peroxodisulfaten, hypochloriger Säure, organischen Säuren wie Essigsäure und Zitronensäure, und Mischugnen von zwei oder mehr dieser Säuren.

14. Verwendung gemäß Anspruch 12, **dadurch gekennzeichnet, dass** Salzsäure in einer Konzentration von 20 bis 37 Gew.-% HCl, insbesondere von 30 bis 33 Gew.-% HCl, als Säure verwendet wird.

15. Verwendung gemäß einem der Ansprüche 12 bis 14, **dadurch gekennzeichnet, dass** die Umsetzung in einer durch den Reaktor fließenden flüssigen Phase erfolgt und das gebildete Chlor und/oder Chlordioxid und Kohlendioxid eine im Gegenstrom geführte Gasphase bilden, die vorzugsweise durch eine Vakuumpumpe aus dem Reaktor abgezogen wird.

16. Verwendung gemäß einem der Ansprüche 12 bis 15, **dadurch gekennzeichnet, dass** zusätzliches Verdünnungsgas, insbesondere ein Aerosol von Wasser in dem Verdünnungsgas, bevorzugt in Luft, zur weiteren Verdünnung des gebildeten Chlor und/oder Chlordioxid verwendet wird.
